# EUROPEAN PATENT SPECIFICATION

(11) **EP 3 809 330 B1**
(45) Date of publication and mention of the grant of the patent: **29.05.2024**
(21) Application number: 19398011.7
(22) Date of filing: 17.10.2019
(51) Int. Cl.: G06K 19/077, B26B 3/00, B26B 11/00

(54) **CUTLERY ARTICLE WITH A PASSIVE UHF IDENTIFIER**
BESTECKARTIKEL MIT PASSIVER UHF-KENNUNG
ARTICLE DE COUTELLERIE AYANT UN IDENTIFIANT UHF PASSIF

(43) Date of publication of application: 21.04.2021
(73) Proprietor: Ivo Cutelarias, Lda., 2500-770 Santa Catarina Cld (PT)
(72) Inventor: Cabrita Ivo Peralta, António, 2500-770 Santa Catarina CLD (PT)
(74) Representative: Pereira da Cruz, Joao

(56) References cited:
- WO-A1-2009/146677
- US-A1- 2009 121 942
- US-A1- 2016 221 198
- US-B2- 8 269 670
- Anonymous: "OPP IOT Focus on UHF RFID tags design and manufacture: 2017", , 8 November 2017 (2017-11-08), XP055654224, Retrieved from the Internet: URL:http://oppiot.blogspot.com/2017/ [retrieved on 2019-12-19]

## Description

### Technical Field

The invention relates to a cutlery article which comprises a blade with a tang, a passive UHF identifier, which is connected to the tang, and a handle surrounding the tang and the passive UHF identifier.

### Background

The cutlery article according to the invention may be tracked by an online tracking system, such as the tracking system developed by the applicant.

In the treatment of food, particularly meat, the cleanliness and hygiene play a very important role. Typically, food is treated in contaminated environments. The contamination of food can cause considerable health damage to both the food processor and the consumer.

The cutlery articles which are used in the treatment of food for human consumption must be regularly cleaned and sanitized to prevent both contamination of humans and contamination of food.

In order to minimize the above-mentioned problems, the applicant has developed a cutlery article with a passive UHF identifier, which allows its automatic control by means of an online system, which allows its control from its manufacture to its final recycling.

Several problems were encountered during the implementation of the cutlery article such as, for instance, the placement of the passive identifier on its tang, the type of passive identifier to be used, its resistance to temperature and pressure, in order for it to be integrated into the production process of the cutlery article.

The reliability of the control made online of a cutlery article from manufacture thereof to its final recycling and, more particularly, of the control of its regular cleaning, sanitation, sharpening, etc. can be performed through tracking and identification thereof by means of a system that includes UHF RFID readers.

The reliability of the control of a cutlery article by means of a system that includes UHF RFID readers depends on the reliability of the reading performed of the passive identifier integrated in the cutlery article, by the UHF RFID readers. If the reading of a cutlery article, for instance, in a room or cleaning station is not reliable, the hygiene of the food cannot be ensured.

Document US2016/221198 discloses a knife including a knife blade having a tang and an RFID transponder which is fixed to the tang. A knife handle surrounds the tang and the RFID transponder. The knife blade is produced from metal, in particular steel. The RFID transponder has an antenna and at least a portion of the antenna of the RFID transponder is constructed in a planar manner and is arranged parallel with a planar lateral face of the tang. In another embodiment, the antenna of the RFID transponder is galvanically connected to the tang. The knife having the RFID transponder increases the reliability of the reading by an RFID reading device.

Document WO2009/146677 discloses a hand tool made of at least one metal part. An opening (18) having a slit (20) toward the outside is disposed in the metal part, and an RFID chip (22) having a coupling loop (24) is disposed in the opening (18).

Document US2009/121942 discloses radio frequency identification (RFID) tag and ceramic patch antenna for radio frequency identification systems. The radio frequency identification tag in accordance with this invention comprises; lower antenna member of which one end is formed with coupling projection for conjoining; upper antenna member of which one end is formed with coupling groove for conjoining; an RFID chip of which one end is conjoined with the coupling projection of the said lower antenna member and the other end is conjoined with the coupling groove of the said upper antenna member, containing the information of the objective management item which communicates with the terminal device; and a spacer which electrically isolates the said antenna members. The said antenna members are conjoined on the top and bottom sides of the said spacer in parallel direction. The RFID chip which is conjoined with the said antenna members is placed on the top or bottom side of the said spacer.

Document US8269670 discloses An RFID tag includes a circuit board assembly having a circuit board, an RFID circuit, an antenna, and a metallic ground plane. The circuit board has a first side and a second side. The circuit board carries the antenna on the first side and the ground plane on the second side. The RFID circuit is coupled with each of the antenna and the ground plane. A backplane is coupled with the ground plane, on a side of the ground plane opposite the circuit board. An overmolded housing surrounds and hermetically seals the circuit board assembly. The housing is comprised of a material which is both autoclavable and has a low dielectric constant of between approximately 1 to 5.These facts are disclosed in order to illustrate the technical problem addressed by the present disclosure.

### General Description

The invention has for its object to provide a cutlery article with a passive identifier on its tang, the readability of which by a RFID UHF reader is increased and which solves or at least minimizes the problems mentioned above.

This object is achieved by a cutlery article as defined in claim 1, for example of the type mentioned in the beginning, which comprises a metallic blade, in particular of stainless steel, which extends through a tang, in which a passive identifier is arranged, which comprises two antennas arranged parallel in any flat surface of the tang suitable for the purpose.

According to the invention the passive identifier is a UHF RFID transponder (ultra-high frequency in the range of 860 to 960 MHz) and one of its antennas is directly and electrically connected to said tang, said UHF RFID transponder belonging to the Iron Tag group. This frequency range allows the reading of the cutlery articles at a great distance (over than 1,5 m) and with great speed (around 294 m.s-1) and allows a quick response of the control system, that is, about 3s.

According to the invention, the blade of the cutlery article and its tang, which supports the passive UHF identifier, is integrated into a cutlery article handle, which integration is performed in order to be provided a very reliable reading of said UHF RFID transponder.

According to the invention, an Iron Tag group UHF RFID transponder is used, as the UHF RFID transponders group have been specially designed for adverse environments, with extreme pressure and temperature, which confers to the UHF RFID transponders a very good resistance and durability to pressure and temperature of the plastic handle injection moulding process, the same being mounted on FR-4 PCB, fiberglass dielectric compound, since the UHF RFID transponder is implanted inside the handle as it is not admissible to change the mechanical, aesthetic and functional features of the cutlery articles.

Since the blade of the cutlery article is metallic and electrically conductive it can, therefore, produce electrical currents induced upon the introduction of high frequency pulses into the blade by a UHF RFID reader. Similarly, the blade of the cutlery article can be used to maximize the irradiation of reflected and modelled pulses by the UHF RFID transponder.

### Brief Description of the Drawings

The following figures provide preferred embodiments for illustrating the disclosure and should not be seen as limiting the scope of invention.

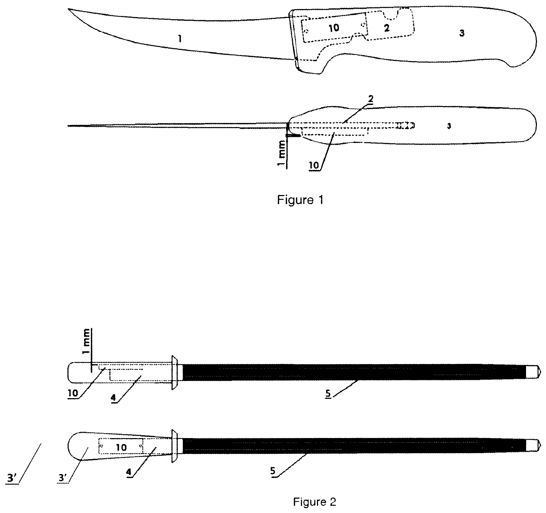

**Figure 1** illustrates a side and top schematic view of a cutlery article according to a first embodiment of the invention. Figure 1 shows a cutlery article according to a first embodiment of the invention, respectively, in a side view and a top view. The cutlery article comprises a cutting blade 1, a tang 2, extending from the cutting blade 1, it being attached to the tang a UHF RFID transponder 10, and also a handle 3, which surrounds a small portion of the cutting blade 1 and the set formed by the tang 2 and the UHF RFID transponder 10. The polypropylene handle 3 is made by an injection moulding process, so the UHF RFID transponder 10 must withstand the high pressure and temperature of this moulding process. In this figure it is highlighted that there must be a gap of 1 mm between a portion of the UHF RFID transponder and the environment.
**Figure 2** illustrates a top and side schematic view of a cutlery article according to a second embodiment of the invention. Figure 2 shows another cutlery article according to a second embodiment of the invention, which comprises a sharpening rifle 5 and a tang 4 extending from the sharpening rifle, with an UHF RFID transponder 10 being attached to the tang 4. The handle 3', as in the first embodiment, surrounds a small portion of the sharpening rifle 5 and the set formed by the tang 2 and the UHF RFID transponder 10, the handle 3' being of the same material and made by the same process as the handle of the first embodiment. In this figure it is also highlighted that there must be a gap of 1 mm between a portion of the UHF RFID transponder and the environment.

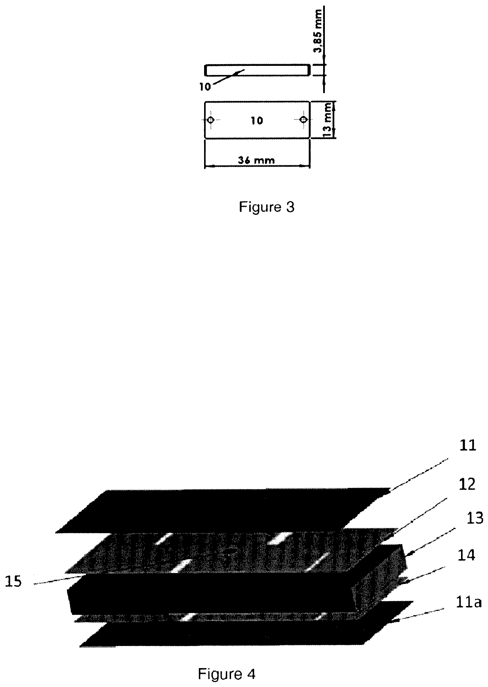

**Figure 3** illustrates top and side schematic views of a UHF RFID transponder used in the present invention, wherein it is highlighted its dimensions. Figure 3 shows schematically, in a top and side view, a UHF RFID transponder in the form of a straight parallelepiped, which is used in the present invention, where its dimensions are indicated.
**Figure 4** illustrates an exploded perspective schematic view of a UHF RFID transponder used in the embodiments according to the present invention. Due to the fact that the UHF RFID transponder 10 has to withstand the high pressure and temperature of the injection moulding process, the UHF RFID transponder 10 which has shown, during the tests performed to make the cutlery article, an improved performance with regard to the pressure and temperature resistance capabilities inherent to the injection moulding process and, at the same time, presents two antennas and a frequency range that allows for the reading of the cutlery articles at a great distance (greater than 1,5 m) and with great speed (294 m.s-1), was an ultra-high frequency UHF RFID transponder in the range of 860 to 960 MHz and the microchip of which belongs to the Iron Tag group which is commercially available under the OPP3613 reference of the OPP IOT Technologies Co., Ltd.

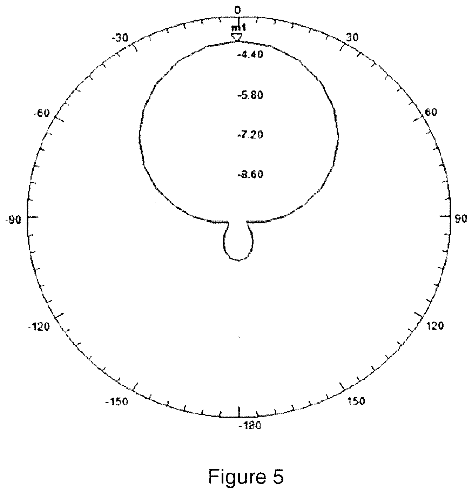

**Figure 5** illustrates an UHF RFID transponder irradiation diagram without metallic contact with the tang of the blade. Figure 5 schematically shows a perspective exploded view of the UHF RFID transponder, as mentioned above, which comprises two layers of ink 11 and 11a, two equal antennas 12 and 14 and a central core 13, which consists of FR4 (glass fiber composite dielectric material), which includes a PCB (printed circuit board), that is, a microchip. Effectively, the fact that it comprises two antennas, one being directly and electrically connected to said tang, optimizes the performance of this UHF RFID transponder. Its frequency range allows the reading of the cutlery articles at a great distance (overthan 1,5 m) and with great speed (294 m.s-1) and also allows a quick response from the control system, that is, about 3 s.

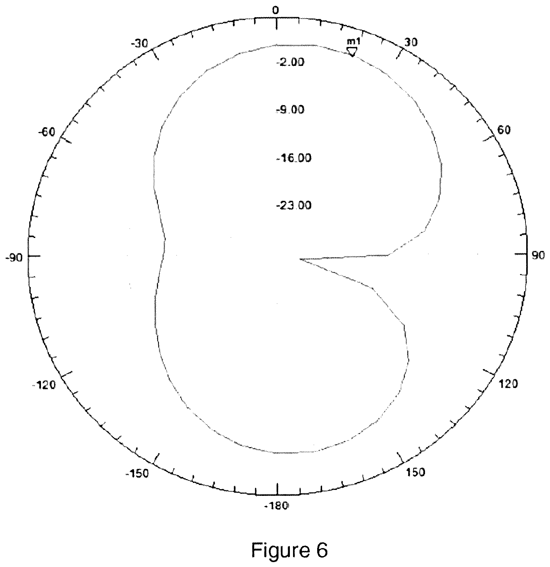

**Figure 6** illustrates an UHF RFID transponder irradiation diagram used with metallic contact with the tang of the blade according to the present invention.

In Figures 5 and 6 there are represented the irradiation diagrams of a cutlery article whose tang is not directly and electrically connected to a UHF RFID transponder with the reference OPP3613 of the company OPP IOT Technologies Co., Ltd and a irradiation diagram of an cutlery article whose tang is directly and electrically connected to a UHF RFID transponder with the reference OPP3613 of the company OPP IOT Technologies Co., Ltd, there being highlighted the huge increase of the irradiation when a tang is directly and electrically connected to a UHF RFID transponder.

### Detailed Description

The invention provides, in its presently preferred embodiment, the electrical coupling of the antenna of the UHF RFID transponder to the tang due to the arrangement of, at least, a flat portion of one of its antennas parallel to any flat side surface suitable for the effect of the tang. In this way, the blade can be integrated directly into the antenna function of the UHF RFID transponder. In this case, between the antenna and the tang there is only one non-insulating ink layer, preferably from between 0,01 mm to 0,03 mm, more preferably of 0,02 mm. The connection of the UHF RFID transponder to the tang is made, preferably, by attachment through epoxy resins.

The UHF RFID transponder is, according to the invention, passive and comprises two antennas, which provide the desired UHF RF communications. Thus, the placement of the UHF RFID transponder can be performed on either side of the tang, the behaviour being independent from the site of placement.

According to the invention, a external surface of the UHF RFID transponder, that is, of one of the antennas, is preferably between 3 mm² and 5 mm², it being more preferably 4 mm². These areas proved to be most suitable for large cutlery articles and for reading distances of about 1,5 m.

A large area UHF RFID transponder has to be considered as its arrangement in small dimension cutlery articles (peeling knives) disordered in boxes implies that the RF pulses coming from the UHF RFID transponder have different orientations, it being necessary to obtain RF pulses with the biggest possible range.

According to the invention, the optimal arrangement of the UHF RFID transponder, which has the straight parallelepiped shape, is the one closest to the outside, in order to exist a gap, preferably between 0,8 mm to 1,2 mm, more preferably of 1 mm between the UHF RFID transponder inserted into the handle, and the outer surface of the handle, so that the cutlery article is given the necessary mechanical properties and maintaining the bigger opposed face of the UHF RFID transponder in contact with the blade.

The microchip of the UHF RFID transponder comprises a code that unambiguously identifies the cutlery article, the microchip also containing, however, further information, alternatively or additionally.

The disclosure should not be seen in any way restricted to the embodiments described and a person with ordinary skill in the art will foresee many possibilities to modifications thereof.

The following claim 1 defines the invention and the dependent claims further set out particular embodiments of the disclosure.

## Claims

1. Cutlery apparatus, which comprises a metallic blade (1) or a metallic rifle (5), the blade (1) being of stainless steel, extending through a tang (2 or 4), in which a passive identifier (10) is arranged, which comprises two antennas (12, 14), arranged parallel to each other, wherein one antenna is being directly and electrically connected to a flat surface of the tang (2 or 4), and wherein the cutlery apparatus further comprises a handle (3 or 3'), which surrounds a small portion of the metallic blade (1) or of the metallic rifle (3) and surrounds completely the tang (2 or 4) and the passive identifier (10), **characterized in that** the passive identifier (10) is an ultra-high frequency radio-frequency identification transponder in the range of 860 to 960 MHz, and that the two antennas are separated by a central core including a microchip.

2. Cutlery article according to claim 1, **characterized in that** the external surface of the passive identifier (10) is between 3 mm² and 5 mm², being more preferably of 4 mm².

3. Cutlery article according to claim 1, **characterized in that** the connection between said passive identifier (10) and the tang is made by attachment through epoxy resins.

4. Cutlery article according to claim 1, **characterized in that** the handle is made of plastic, the plastic being preferably polypropylene.

5. Cutlery article according to claim 1, **characterized in that** there is a gap between said passive identifier (10), inserted into the handle (3 or 3') and the outer surface of said handle (3 or 3'), the gap being preferably between 0,8 mm and 1,2 mm, more preferably of 1 mm.

## Patentansprüche

1. Besteckgerät, die eine metallische Klinge (1) oder ein metallisches Gewehr (5) umfasst, wobei die Klinge (1) aus rostfreiem Stahl besteht, die sich durch eine Angel (2 oder 4) erstreckt, in der eine passive Kennung (10) angeordnet ist, die zwei parallel zueinander angeordnete Antennen (12, 14) umfasst, wobei eine Antenne direkt und elektrisch mit einer ebenen Fläche der Angel (2 oder 4) verbunden ist und wobei die Besteckgerät zusätzlich einen Griff (3 oder 3') umfasst, der einen kleinen Teil der metallischen Klinge (1) oder des metallischen Gewehrs (3) umschließt und die Angel (2 oder 4) und die passive Kennung (10) vollständig umschließt, **dadurch gekennzeichnet, dass** die passive Kennung (10) ein Ultrahochfrequenz-Radiofrequenz-Identifikationstransponder im Bereich von 860 bis 960 MHz ist und dass die beiden Antennen durch einen zentralen Kern mit einem Mikrochip getrennt sind.

2. Besteckgerätl nach Anspruch 1, **dadurch gekennzeichnet, dass** die *außere Obenfläche des passiven Kennung (10) zwischen 3 mm² und 5 mm² liegt, vorzugsweise 4 mm².

3. Besteckgerät nach Anspruch 1, **dadurch gekennzeichnet, dass** die Verbindung zwischen dem gennanten passiver Kennung (10) und dem Angel durch Anbringung mittels mittels Epoxidharzen hergestellt wird.

4. Besteckgerät nach Anspruch 1, **dadurch gekennzeichnet, dass** der Griff aus Kunststoff besteht, wobei der Kunststoff vorzugsweise Polypropylen ist.

5. Besteckgerät nach Anspruch 1, **dadurch gekennzeichnet, dass** zwischen dem gennanten passiver Kennung (10), die in den Griff (3 oder 3') eingesetzt ist, und der *außeren Obenfläche des gennaten Griffes (3 oder 3') ein Spalt vorhanden ist, wobei der Spalt vorzugsweise zwischen 0,8 mm und 1,2 mm liegt, besonders bevorzugt 1 mm.

## Revendications

1. Appareil de coutellerie comprenant une lame métallique (1) ou un fusil métallique (5), la lame (1) étant en acier inoxydable, s'étendant à travers une soie (2 ou 4), dans laquelle un identificateur passif (10) est disposé, qui comprend deux antennes (12, 14), disposées parallèlement l'une à l'autre, dans lequel une antenne est directement et électriquement connectée à une surface plate de la soie (2 ou 4), et dans lequel l'appareil de coutellerie comprend en outre un manche (3 ou 3'), qui entoure une petite partie de la lame métallique (1) ou du fusil métallique (3) et entoure complètement la soie (2 ou 4) et l'identifiant passif (10), **caractérisé en ce que** l'identifiant passif (10) est un transpondeur d'identification par radiofréquence à ultra-haute fréquence dans la gamme de 860 à 960 MHz, et **en ce que** les deux antennes sont séparées par un noyau central comprenant un microprocesseur.

2. Article de coutellerie selon la revendication 1, **caractérisé en ce que** la surface externe de l'identifiant passif (10) est comprise entre 3 mm² et 5 mm², étant plus préférentiellement de 4 mm².

3. Article de coutellerie selon la revendication 1, **caractérisé en ce que** la connexion entre ledit identifiant passif (10) et la soie est réalisée par fixation par moyen de résines époxy.

4. Article de coutellerie selon la revendication 1, **caractérisé en ce que** le manche est en plastique, le plastique étant préférentiellement du polypropylène.

5. Article de coutellerie selon la revendication 1, **caractérisé en ce qu'**il y a un espace entre ledit identificateur passif (10), inséré dans le manche (3 ou 3') et la surface extérieure dudit manche (3 ou 3'), l'espace étant préférentiellement compris entre 0,8 mm et 1,2 mm, plus préférentiellement de 1 mm.
